# EUROPÄISCHE PATENTSCHRIFT

(11) **EP 0 970 330 B1**
(45) Veröffentlichungstag und Bekanntmachung des Hinweises auf die Patenterteilung: **17.10.2001**
(21) Anmeldenummer: 98917081.6
(22) Anmeldetag: 25.03.1998
(51) Int. Cl.: F24F 13/14, F16K 1/22

(54) **STUFENVENTIL, INSBESONDERE KABINENABLUFTVENTIL IN EINEM FLUGGERÄT, UND VERFAHREN ZUR REGULIERUNG DES KABINENDRUCKS**
DIFFERENTIAL VALVE, SPECIALLY A CABIN AIR DISCHARGE VALVE IN AN AIRCRAFT, AND METHOD FOR REGULATING CABIN PRESSURE
CLAPET A GRADINS, NOTAMMENT CLAPET D'AIR D'EVACUATION DE CABINE DANS UN APPAREIL VOLANT ET PROCEDE DE REGULATION DE LA PRESSION REGNANT DANS LA CABINE

(30) Priorität: 27.03.1997 DE 19713125
(43) Veröffentlichungstag der Anmeldung: 12.01.2000
(73) Patentinhaber: Nord-Micro AG & Co. OHG, 60388 Frankfurt am Main (DE)
(72) Erfinder: STEINERT, Martin, D-63500 Seligenstadt (DE); RUMPLIK, Daniel, Hampden, MA 01036-9663 (US)
(74) Vertreter: Preissner, Nicolaus, Dipl.-Ing.
(86) Internationale Anmeldenummer: EP9801758
(87) Internationale Veröffentlichungsnummer: WO9844300

(56) Entgegenhaltungen:
- EP-A- 0 320 490
- DE-C- 673 453
- DE-U- 1 890 465
- US-A- 2 299 865
- US-A- 2 349 727

## Beschreibung

Die vorliegende Erfindung betrifft ein Stufenventil, insbesondere ein Kabinenabluftventil in einem Fluggerät sowie ein Verfahren zur Regulierung des Kabinendrucks in einem Fluggerät.

Stufenventile, insbesondere Kabinenabluftventile in einem Kabinendruckregelsystem eines Flugzeugs, regeln den Druck innerhalb der Kabine in einem festgelegten Bereich, der lebensnotwendig für die Sicherheit der an Bord befindlichen Personen ist und ihnen einen maximalen Komfort bietet. Durch die Stufenventile wird den Insassen entsprechend der Flughöhe der entsprechende Partialdruck des Sauerstoffs bereitgestellt. Durch die Betätigung der Stufenventile kann der aus der Kabine austretende Luftmassenstrom reguliert und variiert werden.

Die EP-A 0 320 490 betrifft ein Absperrorgan für eine Rohrleitung. Das Absperrorgan weist eine Ventilklappe auf, die auf einer Ringscheibe zum Andrücken an einen Ventilsitz verschiebbar ist. In der Mitte der Ventilklappe sind Kanäle vorgesehen, die von einem Ventilteller verschließbar sind. Der Ventilteller wird von einem Tellerfederpaket vorgespannt. Zum Schließen wird die Ventilklappe zusammen mit dem Ventilteller über eine Welle verdreht, anschließend gegenüber der Ringscheibe verschoben und an den Ventilsitz gedrückt. Der Ventilteller verschließt unverändert die Kanäle in der Ventilklappe. Ein Bewegen des Ventiltellers gegenüber der Ventilklappe beim Schließen des Ventils gemäß EP-A 0 320 490 ist nicht möglich.

Beim Öffnen des Ventils gemäß EP-A 0 320 490 liegen in Abhängigkeit von den Druckverhältnissen zwei unterschiedliche Öffnungsvorgänge vor. Bei einem nur geringen Druckunterschied oder einem Überdruck auf der rechten Seite der Ventilklappe wird das Ventil einfach durch Abheben der Ventilklappe und anschließendes Verdrehen geöffnet. Der Ventilteller und die Kanäle sind an dem Öffnungsvorgang nicht beteiligt.

Sobald auf der linken Seite der Ventilklappe ein bestimmter Überdruck herrscht, kann dieser nicht von dem Ventilsitz abgehoben werden. Eine Drehung der Welle bewirkt daher keine Bewegung der Ventilklappe, sondern ein Verschieben des Ventiltellers. Hierbei wird das Tellerfederpaket zusammengedrückt, so daß die Kanäle freigegeben werden. Nach dem Freigeben der Kanäle wird der Überdruck auf der linken Seite der Ventilklappe abgebaut. Sobald der Überdruck derart reduziert ist, daß der Druckunterschied zwischen beiden Seiten der Ventilklappe auf ein ausreichendes Maß abgefallen ist, hebt das Tellerfederpaket automatisch die Ventilklappe von dem Ventilsitz im Gehäuse ab. Hierbei werden gleichzeitig die Kanäle verschlossen. Anschließend kann die Ventilklappe ohne weiteres verschwenkt werden.

Nur unter bestimmten Umständen, nämlich bei einem vergleichsweise großen Überdruck auf der linken Seite der Ventilklappe, wird der Ventilteller beim Öffnen des Ventils vorübergehend abgehoben. Dieses Abheben geschieht automatisch und kann nicht beeinflußt werden. Solange der Überdruck anliegt, kann die Ventilklappe nicht von ihrem Ventilsitz abgehoben werden. Sobald der Überdruck größtenteils abgebaut worden ist, werden die Ventilklappe automatisch abgeschlossen und die Kanäle verschlossen. Der Benutzer hat keinerlei Kontrolle oder Einfluß auf das Öffnen und Schließen der Kanäle. Weiter kann die Ventilklappe nicht in allen Betriebszuständen geöffnet werden. Auch das Abheben des Ventiltellers kann vom Benutzer nicht bewußt herbeigeführt werden.

Es ist weiter bekannt, für die Regulierung des Kabinendrucks zwei getrennte Ventile zu verwenden. Dabei sind die Ventile derart gesteuert, daß eines der Ventile bei einem höheren Differenzdruck, d. h. bei Flug in großen Höhen, öffnet, während das zweite Ventil geschlossen bleibt. Erst bei niedrigen Differenzdrücken, d. h. bei Flügen in niedrigen Höhen oder am Boden öffnet auch das zweite Ventil. Durch diese Ventilanordnung kann zwar der austretende Luftmassenstrom aus der Kabine ausreichend gut reguliert werden, allerdings weist das Ventilsystem einen komplizierten Aufbau auf und ist somit in seiner Herstellung relativ kostenintensiv. Darüber hinaus müssen die beiden Ventile über unabhängige Antriebsgetriebe betätigt werden.

Ein weiteres bekanntes Ventil zur Regulierung des Kabinendrucks in einem Flugzeug besteht aus einem Ventil mit einer einzigen Ventilklappe, die in Abhängigkeit von dem herrschenden Differenzdruck zwischen der Kabine und der äußeren Umgebung entsprechend weit geöffnet wird. Durch eine derartige Anordnung kann zwar der Konstruktionsaufwand reduziert werden, jedoch bestehen bei einem solchen Ventilsystem andere Nachteile. Üblicherweise wird mit dem aus dem Ventil austretenden Luftmassenstrom ein zusätzlicher effektiver Schubgewinn erzielt. Ein solcher Schubgewinn ist mit einem einklappigen Ventilsystem nur schwer zu erreichen, da der Luftmassenstrom nicht ausreichend kanalisiert und gerichtet austreten kann.

Ausgehend vom genannten Stand der Technik liegt der vorliegenden Erfindung die Aufgabe zugrunde, ein Stufenventil, insbesondere Kabinenabluftventil in einem Fluggerät, derart weiterzubilden, daß die im Stand der Technik genannten Nachteile vermieden werden.

Insbesondere soll ein Stufenventil geschaffen werden, daß auf einfache und kostengünstige Weise herstellbar ist, und mit dem ein effektiver Schubgewinn durch den austretenden Luftmassenstrom möglich ist.

Gemäß einem weiteren Aspekt der vorliegenden Erfindung soll ein Verfahren geschaffen werden, mit dem der Kabinendruck in einem Fluggerät auf einfache und effektive Weise reguliert werden kann.

Die Aufgabe wird erfindungsgemäß gelöst durch ein Stufenventil, insbesondere ein Kabinenabluftventil in einem Fluggerät, mit einer kleineren ersten Ventilstufe und einer größeren zweiten Ventilstufe und mit einem Antriebsgetriebe, wobei die erste Ventilstufe und die zweite Ventilstufe derart mit dem Antriebsgetriebe verbunden sind, daß die erste Ventilstufe getrennt von der zweiten Ventilstufe betätigt ist, solange die zweite Ventilstufe geschlossen ist.

Das erfindungsgemäße Stufenventil weist zwei Ventilstufen auf, die über ein einziges Antriebsgetriebe betätigt werden. Durch die erfindungsgemäße Ausgestaltung und Regelung des Stufenventils wird die Wirtschaftlichkeit der Klimatisierung in der Kabine des Fluggeräts enorm gesteigert. Dies ist insbesondere deshalb von Bedeutung, da die Luftversorgung an Bord eines Fluggeräts, insbesondere eines Flugzeugs, der größte Sekundär-Energieverbraucher ist. Weiterhin kann durch die getrennte Betätigung der kleineren ersten Ventilstufe und der größeren zweiten Ventilstufe der Luftmassenstrom derart aus dem Stufenventil austreten, daß während des Flugs ein hoher effektiver Schubgewinn erzielt wird. Dazu wird während des Flugs in großen Höhen, d. h. bei einem großen Differenzdruck zwischen dem Kabinenraum und der äußeren Umgebung nur die kleinere erste Ventilstufe geöffnet, aus der der Luftmassenstrom gerichtet und kanalisiert austreten kann. Bei Flügen in geringerer Höhe oder am Boden, d. h. in einem Bereich niedrigen Differenzdrucks zwischen dem Kabinenraum und der äußeren Umgebung wird zusätzlich die zweite größere Ventilstufe geöffnet, so daß eine ausreichend große Öffnung für den Austritt des Luftmassenstroms zur Verfügung steht.

Vorteilhaft sind die erste Ventilstufe und/oder die zweite Ventilstufe plattenförmig ausgebildet.

In vorteilhafter Ausgestaltung der Erfindung sind die erste Ventilstufe und die zweite Ventilstufe in einer Ventilöffnung angeordnet. Auf diese Weise ist nur eine einzige Ventilöffnung im Rumpf des Fluggeräts erforderlich, was den Herstellungs- und Montageaufwand weiter reduziert.

Gemäß einer bevorzugten Ausführungsform der Erfindung ist die erste Ventilstufe innerhalb der zweiten Ventilstufe angeordnet.

Bei einer derartigen Ausgestaltung des Stufenventils können beide Ventilstufen vorteilhaft über eine einzige Drehachse verschwenkt werden, was den Konstruktionsaufwand des Stufenventils verringert. Weiterhin ist es bei einer solchen Anordnung der beiden Ventilstufen möglich, daß die Ventilstufen sowohl in der vollständig geöffneten als auch in der vollständig geschlossenen Stellung des Stufenventils innerhalb einer einzigen Ebene ausgerichtet sind. Dadurch wird ein gerichtet austretender Luftmassenstrom gewährleistet, mit dem zusätzlich eine effektive Schubrückgewinnung bei geringen Betätigungskräften erzielt wird.

Vorteilhaft kann die erste Ventilstufe rechteckig ausgebildet sein und/ oder die zweite Ventilstufe eine runde Grundgeometrie aufweisen. Die runde Grundgeometrie der zweiten Ventilstufe gestattet eine einfache und kostengünstige Herstellungsweise und ermöglicht zusätzlich eine einfache Einpassung des Stufenventils in die Ventilöffnung des Flugzeugrumpfs bei gleichzeitig vorteilhafter Dichtwirkung.

Die Kontur der kleineren ersten Ventilstufe sowie die innere Form der größeren zweiten Ventilstufe sind vorteilhaft aerodynamisch günstig ausgebildet. Insbesondere wird ein maximaler Schubgewinn bei einem minimalen Drehmomentbedarf erzielt.

Gemäß einer weiteren Ausführungsform der vorliegenden Erfindung sind die erste Ventilstufe und die zweite Ventilstufe hintereinander angeordnet.

Wiederum sind beide Ventilstufen innerhalb einer einzigen Ventilöffnung im Rumpf des Flugzeugs angeordnet, wodurch eine kostengünstige Herstellung und Montage des Stufenventils gewährleistet ist. Weiterhin wird durch die erfindungsgemäße Anordnung der Ventilstufen erreicht, daß die beiden Ventilstufen in der vollständig geschlossenen Stellung des Stufenventils in einer Ebene ausgerichtet sind, während die beiden Ventilstufen in der vollständig geöffneten Stellung des Stufenventils parallel zueinander ausgerichtet sind. Durch die entsprechende Anordnung der Ventilstufen kann ein maximaler Schubrückgewinn erzielt werden. Weiterhin ist es möglich, die Drehpunkte der Ventilstufen individuell auszuwählen, wodurch erreicht wird, daß zum Öffnen und Schließen des Stufenventils nur minimale Betätigungskräfte benötigt werden.

Vorteilhaft ist die erste Ventilstufe und/oder die zweite Ventilstufe rechteckig ausgebildet.

In vorteilhafter Ausgestaltung der Erfindung ist das Antriebsgetriebe als Koppelgetriebe ausgebildet, das wenigstens zwei Gelenkelemente aufweist, die drehbar miteinander verbunden sind.

Koppelgetriebe sind dadurch charakterisiert, daß sich ihre Gelenkelemente durch die drehbare Verbindung in parallelen Ebenen bewegen. Vorteile von Koppelgetrieben gegenüber andersartigen Getriebearten liegen in der einfachen und damit kostengünstigen Herstellbarkeit der Gelenkelemente, den Berührungsverhältnissen in den Gelenken sowie die dadurch bedingte hohe Beanspruchbarkeit des Koppelgetriebes. Weiterhin besteht für Koppelgetriebe eine breite Palette vielfältiger Anwendungsmöglichkeiten, insbesondere infolge ihres Reichtums an verschiedenen Strukturen, Bauformen und Bewegungsmöglichkeiten. Dadurch können Koppelgetriebe, beispielsweise durch entsprechende Auswahl der Anzahl an Gelenkelementen sowie deren geometrischer Ausgestaltung an die unterschiedlichsten Anwendungserfordernisse und Raumerfordernisse angepaßt werden.

Vorteilhaft sind die wenigstens zwei Gelenkelemente über Drehgelenke miteinander verbunden.

In vorteilhafter Ausgestaltung weist das Antriebsgetriebe vier Gelenkelemente auf.

Insbesondere durch die Ausgestaltung des Antriebsgetriebes mit vier Gelenkelementen wird erreicht, daß eine gleichmäßige Drehbewegung der Antriebseinheit in eine ungleichmäßige Drehbewegung der einzelnen Ventilstufen umgeformt wird, was zu unterschiedlichen Öffnungswinkeln der einzelnen Ventilstufen führt. Trotz der ungleichmäßigen Drehbewegungen der einzelnen Ventilstufen wird jedoch erreicht, daß die beiden Ventilstufen in der vollständig geöffneten sowie der vollständig geschlossenen Stellung in derselben Position ausgerichtet sind.

Erfindungsgemäß können die erste Ventilstufe und die zweite Ventilstufe derart angeordnet sein, daß sie in der vollständig geöffneten Stellung und der vollständig geschlossenen Stellung in derselben Position ausgerichtet sind. Dadurch wird erreicht, daß die Ventilstufen in der geöffneten Stellung dem austretenden Luftmassenstrom nur einen geringen Widerstand entgegensetzen. Dabei können die beiden Ventilstufen je nach Ausführungsform des Stufenventils in diesen Stellungen beispielsweise eine Ebene bzw. eine Linie bilden oder aber parallel zueinander ausgerichtet sein. Insbesondere in der geschlossenen Stellung ist es jedoch erforderlich, daß die beiden Ventilstufen in einer einzigen Ebene ausgerichtet sind, um eine ausreichende Dichtwirkung des Stufenventils zu erzielen.

In einer anderen vorteilhaften Ausgestaltung weist das Antriebsgetriebe drei Gelenkelemente auf. Hierdurch wird eine konstruktive Vereinfachung des Antriebsgetriebes ermöglicht.

Gemäß einer vorteilhaften Weiterbildung ist das Stufenventil mit einem die Ventilöffnung umgebenden Rahmen versehen. Dieser Rahmen kanalisiert den aus dem Stufenventil austretenden Luftstrom und verbessert das Ausströmen.

Bevorzugt ist der Rahmen mit einem gekrümmten Bereich versehen, der als Anlagefläche für die erste Ventilstufe dient. Beim Öffnen oder Schließen der ersten Ventilstufe gleitet diese mit einem entsprechend geformten Abschnitt auf den gekrümmten Bereich des Rahmens entlang. Hierdurch wird eine zuverlässige Führung der ersten Ventilstufe erreicht.

Bevorzugt sind die erste Ventilstufe und die zweite Ventilstufe derart angeordnet, daß beim Öffnen der ersten Ventilstufe eine von der zweiten Ventilstufe abgewandte Öffnung entsteht. Ein durch diese Öffnung austretender Luftmassenstrom drückt nicht auf die zweite Ventilklappe, so daß diese mit geringerem Kraftaufwand betätigt werden kann. Hierdurch verringert sich das für die Betätigung des Stufenventils erforderliche Drehmoment, so daß weniger Antriebsenergie zur Verfügung gestellt werden muß. Gleichzeitig können kleinere und leichtere Antriebselemente verwendet werden.

Bevorzugt ist die erste Ventilstufe in vollständig geöffnetem Zustand aus der Ventilöffnung entfernt. Die maximale Größe der Ventilöffnung wird hierdurch vergrößert, so daß das Ausströmen eines Luftmassenstroms erleichtert wird. Gleichzeitig sorgt die erste Ventilstufe in ihrer vollständig geöffneten Stellung für eine Kanalisierung des austretenden Luftmassenstroms.

Mit dem vorstehend beschriebenen erfindungsgemäßen Stufenventil wird ein Ventilsystem geschaffen, bei dem die erste Ventilstufe und die zweite Ventilstufe über ein einziges Antriebsgetriebe betätigt werden und wobei die kleinere erste Ventilstufe als Regelstufe während des Flugs bei einem hohen Differenzdruck zum Einsatz kommt und die größere zweite Ventilstufe zusätzlich bei einem niedrigeren Differenzdruck öffnet.

Gemäß einem weiteren Aspekt der vorliegenden Erfindung wird ein Verfahren zur Regulierung des Kabinendrucks in einem Fluggerät, inbesondere einem Flugzeugs über ein vorstehend beschriebenes Stufenventil geschaffen, das durch die folgenden Schritte gekennzeichnet ist:
a) Betätigung der kleineren ersten Ventilstufe als Regelstufe über das Antriebsgetriebe während des Flugs bei einem hohen Differenzdruck; und
b) zusätzliche Betätigung der größeren zweiten Ventilstufe über das Antriebsgetriebe während des Flugs bei einem niedrigen Differenzdruck,
wobei die erste Ventilstufe getrennt von der zweiten Ventilstufe betätigt wird.

Durch das erfindungsgemäße Verfahren wird erreicht, daß durch den austretenden Luftmassenstrom während des Flugs ein möglichst hoher effektiver Schubgewinn erzielt wird. Im Hinblick auf die vorteilhaften Effekte und Wirkungsweisen des erfindungsemäßen Verfahrens wird auf die vorstehenden Ausführungen zum erfindungsgemäßen Stufenventil verwiesen.

In vorteilhafter Ausgestaltung des Verfahrens werden die erste Ventilstufe und die zweite Ventilstufe durch das Antriebsgetriebe derart angetrieben, daß sie in der vollständig geöffneten Stellung und der vollständig geschlossenen Stellung in derselben Position ausgerichtet sind.

Gemäß einem weiteren Aspekt der vorliegenden Erfindung wird das vorstehend beschriebene erfindungsgemäße Stufenventil als Kabinenabluftventil in einem Kabinendruckregelsystem von einem Fluggerät, insbesondere einem Flugzeug verwendet.

Die Erfindung wird nun anhand von Ausführungsbeispielen unter Bezugnahme auf die Zeichnung näher beschrieben. Es zeigen:
- Figur 1: einen Querschnitt durch ein Stufenventil gemäß einer ersten Ausführungsform der Erfindung, wobei sich die beiden Ventilstufen in der geschlossenen Position befinden;
- Figur 2: einen Querschnitt durch das Stufenventil gemäß Figur 1, wobei die kleinere erste Ventilstufe geöffnet ist;
- Figur 3: einen Querschnitt durch das Stufenventil gemäß Figur 1, wobei beide Ventilstufen vollständig geöffnet sind;
- Figur 4: einen Querschnitt durch ein Stufenventil gemäß einer zweiten Ausführungsform der Erfindung, wobei beide Ventilstufen geschlossen sind;
- Figur 5: einen Querschnitt durch das Stufenventil gemäß Figur 4, wobei die kleinere erste Ventilstufe geöffnet ist;
- Figur 6: einen Querschnitt durch das Stufenventil gemäß Figur 4, wobei beide Ventilstufen vollständig geöffnet sind;
- Figur 7: einen Querschnitt durch ein Stufenventil gemäß einer dritten Ausführungsform der Erfindung, wobei beide Ventilstufen geschlossen sind;
- Figur 8: einen Querschnitt durch das Stufenventil gemäß Figur 7, wobei die kleinere erste Ventilstufe geöffnet ist; und
- Figur 9: einen Querschnitt durch das Stufenventil gemäß Figur 7, wobei beide Ventilstufen vollständig geöffnet sind.

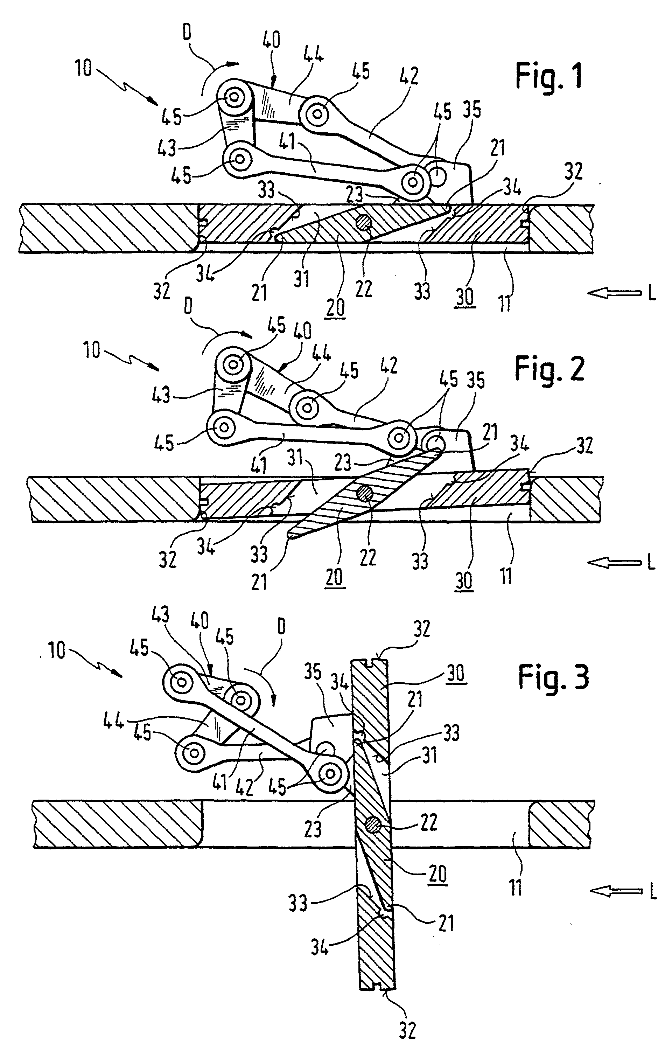

In den Figuren 1 bis 3 ist ein erstes Ausführungsbeispiel der Erfindung beschrieben.

Wie in Figur 1 dargestellt ist, ist das Stufenventil 10 in einer Ventilöffnung 11 eines Flugzeugs angeordnet. Das Stufenventil 10 besteht aus einer kleineren ersten Ventilstufe 20, einer größeren zweiten Ventilstufe 30 sowie einem Antriebsgetriebe 40. Die erste Ventilstufe 20 ist innerhalb der zweiten Ventilstufe 30 angeordnet. Sowohl die erste Ventilstufe 20 als auch die zweite Ventilstufe 30 sind über eine gemeinsame Drehachse 22 drehbar im Stufenventil 10 angeordnet. Die zweite Ventilstufe 30 weist eine runde Grundgeometrie auf, während die erste Ventilstufe 20 rechteckig ausgebildet ist. Auf jeden Fall sind die erste Ventilstufe 20 und die zweite Ventilstufe 30 derart ausgebildet, daß sie eine aerodynamisch günstige Konfiguration aufweisen.

Die zweite Ventilstufe 30 weist zu der Ventilöffnung 11 hin ausgerichtete Stirnseiten 32 auf. Die Stirnseiten 32 sind mit einer leichten Rundung versehen, so daß die zweite Ventilstufe 30 in der Ventilöffnung 11 leicht gedreht werden kann. Weiterhin ist die Ventilöffnung 11 mit leicht zurückspringenden Kanten versehen, wodurch die Drehbarkeit der zweiten Ventilstufe 30 zusätzlich verbessert wird.

Die zweite Ventilstufe 30 weist eine Öffnung 31 auf, in der die erste Ventilstufe 20 drehbar angeordnet ist. Die Wände 33 der Ventilstufe 30 im Bereich der Öffnung 31 sind schräg geneigt ausgebildet und weisen jeweils eine Aussparung 34 auf, in die sich im geschlossenen Zustand des Stufenventils 10 die Enden 21 der ersten Ventilstufe 20 einlegen. In den Aussparungen 34 können vorteilhaft Dichtelemente vorgesehen sein.

Die erste Ventilstufe 20 hat annäherungsweise die Form eines Parallelogramms, wobei die erste Ventilstufe 20 im Bereich der Drehachse 22 ihren größten Durchmesser aufweist und zu den Enden 21 hin spitz zusammenläuft. Durch diese Ausgestaltung der ersten Ventilstufe 20 wird erreicht, daß sich die Enden 21 im geschlossenen Zustand des Stufenventils gegen die Wände 33 und die Aussparungen 34, in denen Dichtelemente vorgesehen sein können, der zweiten Ventilstufe 30 anlegen, so daß kein Luftmassenstrom aus dem Stufenventil 10 austreten kann.

Die kleinere erste Ventilstufe 20 und die größere zweite Ventilstufe 30 werden über ein einziges Antriebsgetriebe 40 angetrieben. Das Antriebsgetriebe 40 besteht aus insgesamt vier Gelenkelementen 41, 42, 43, 44, die über jeweilige Drehgelenke 45 drehbar miteinander verbunden sind. Die erste Ventilstufe 20 ist über einen Befestigungsabschnitt 23 mit dem knochenartig ausgebildeten Gelenkelement 41 verbunden. Die zweite Ventilstufe 30 ist über einen Befestigungsabschnitt 35 mit dem knochenartig ausgebildeten Gelenkelement 42 verbunden. Die Gelenkelemente 41, 42 sind wiederum über Gelenkelemente 43, 44 indirekt miteinander verbunden. Die nicht dargestellte Antriebseinheit des Antriebsgetriebes 40 ist mit diesem im Verbindungsbereich der Gelenkelemente 43 und 44 verbunden.

Ein Anströmen des Stufenventils 10 erfolgt in Pfeilrichtung L.

Die Funktionsweise des Stufenventils 10 wird nun unter Bezugnahme auf die Figuren 1 bis 3 beschrieben. In Figur 1 ist das Stufenventil 10 in geschlossener Stellung dargestellt. Sowohl die erste Ventilstufe 20 als auch die zweite Ventilstufe 30 befinden sich in der geschlossenen Position. Durch die Tatsache, daß die Enden 21 der ersten Ventilstufe 20 auf den Wänden 33 und in den Aussparungen 34, in denen Dichtelemente vorgesehen sein können, der zweiten Ventilstufe 30 auf- bzw. anliegen, kann der Luftmassenstrom nicht aus dem Stufenventil 10 austreten.

In Figur 2 ist das Stufenventil 10 mit geöffneter erster Ventilstufe 20 dargestellt. Eine derartige Einstellung des Stufenventils 10 erfolgt beispielsweise dann, wenn sich das Flugzeug im Reiseflug, d. h: im Flug in großen Höhen befindet. Während des Reisflugs des Flugzeugs herrscht ein großer Differenzdruck zwischen dem Kabineninnnnraum und der äußeren Umgebung des Flugzeugs. Um einen effektiven Luftmassenstrom zu erzeugen, der zu einem wirkungsvollen Schubgewinn führt, ist es ausreichend, daß bei einem großen Differenzdruck nur die erste Ventilstufe 20 geöffnet ist, während die zweite Ventilstufe 30 geschlossen bleibt. Um eine derartige Positionierung der beiden Ventilstufen 20, 30 des Stufenventils 10 zu erreichen, wird das Antriebsgetriebe 40 in der durch den Pfeil D dargestellten Drehrichtung verdreht. Da die erste Ventilstufe 20 über den Befestigungsabschnitt 23 zwar drehbar aber dennoch fest mit dem Gelenkelement 41 des Antriebsgetriebes 40 verbunden ist, führt eine entsprechend dem Pfeil D durchgeführte Bewegung des Antriebsgetriebes zu einer Öffnung der ersten Ventilstufe 20. Auf Grund der Verwendung eines Antriebsgetriebes 40 mit insgesamt vier Gelenkelementen wird die gleichmäßige Drehbewegung der nicht dargestellten Antriebseinheit für das Antriebsgetriebe 40 in eine ungleichmäßige Drehbewegung der einzelnen Ventilstufen 20, 30 umgeformt. Dies führt zu unterschiedlichen Öffnungswinkeln der Ventilstufen. Im vorliegenden Ausführungsbeispiel wird durch die entsprechend ausgewählten Gelenkelemente, insbesondere hinsichtlich ihrer Länge, ihrer Winkelstellung und Positionierung erreicht, daß die erste Ventilstufe 20 durch Betätigung des Antriebsgetriebes 40 geöffnet werden kann, während die zweite Ventilstufe 30 geschlossen bleibt. In der Darstellung gemäß Figur 2 ist die erste Ventilstufe 20 soweit geöffnet, daß nicht nur eine vorteilhafte Regelung des austretenden Luftmassenstroms gewährleistet ist, sondern gleichzeitig auch ein effektiver Schubgewinn bei geringen Betätigungskräften erzielt wird. Die zweite Ventilstufe 30 ist weiterhin soweit geschlossen, daß durch diese kein Luftmassenstrom austreten kann.

In Fällen eines niedrigen Differenzdrucks zwischen dem Kabineninnenraum und der äußeren Umgebung des Flugzeugs, beispielsweise beim Flug in niedrigen Höhen oder am Boden, ist es erforderlich, daß der Luftmassenstrom durch eine ausreichend große Öffnung austreten kann. Bei niedrigen Differenzdrücken muß deshalb das Stufenventil 10 vollständig geöffnet werden, wie dies in Figur 3 dargestellt ist. Durch das weitere Verdrehen des Antriebsgetriebes 40 in Richtung des Pfeiles D werden nunmehr auch die mit der zweiten Ventilstufe 30 in Verbindung stehenden Gelenkelemente 42, 44 verschoben, wodurch auch die zweite Ventilstufe 30 geöffnet wird. In der in Figur 3 dargestellten vollständig geöffneten Position des Stufenventils 10 sind die beiden Ventilstufen 20, 30 in einer Ebene bzw. einer Linie ausgerichtet, so daß dem Luftmassenstrom bei dem herrschenden geringen Differenzdruck ein minimaler Widerstand entgegengesetzt wird. Weiterhin wird durch die Stellung des Stufenventils 10 eine maximale Öffnung für den Austritt des Luftmassenstroms erzeugt.

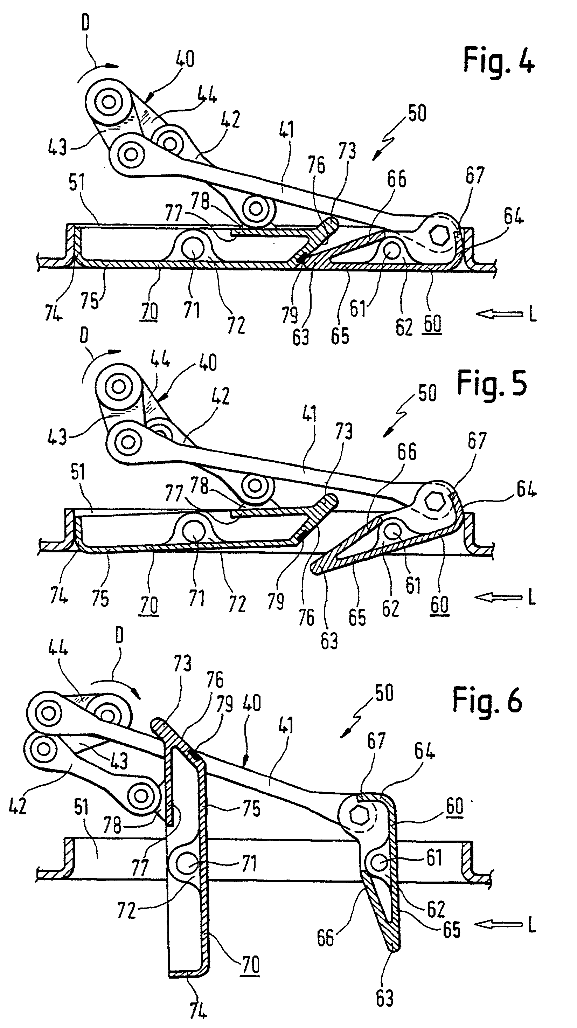

In den Figuren 4 bis 6 ist ein weiteres Ausführungsbeispiel des erfindungsgemäßen Stufenventils dargestellt.

Gemäß Figur 4 ist das Stufenventil 50 wiederum in einer Ventilöffnung 51 eines Flugzeugrumpfs angeordnet. Das Stufenventil 50 weist eine erste Ventilstufe 60, eine zweite Ventilstufe 70 sowie ein Antriebsgetriebe 40 auf. Das Antriebsgetriebe 40 entspricht in seinem Aufbau dem in bezug auf die Figuren 1 bis 3 beschriebenen Antriebsgetriebe, so daß gleiche und funktionsgleiche Bauteile mit identischen Bezugszeichen versehen sind und auf eine erneute detaillierte Beschreibung des Antriebsgetriebes 40 verzichtet wird. Die erste Ventilstufe 60 und die zweite Ventilstufe 70, die jeweils eine rechteckige Grundgeometrie aufweisen, sind hintereinander in der Ventilöffnung 51 angeordnet.

Die kleinere erste Ventilstufe 60 ist plattenartig ausgebildet und über eine Drehachse 61 und einen Befestigungsbereich 62 drehbar im Stufenventil 50 angeordnet. Die erste Ventilstufe 60 besteht aus einer Grundplatte 65, einer Leitplatte 66 sowie einem zur Wand der Ventilöffnung 51 hin ausgerichteten Endbereich 64. Im freien Ende des Endbereichs 64 ist ein Befestigungsabschnitt 67 vorgesehen, über den die erste Ventilstufe 60 mit dem Gelenkelement 41 des Antriebsgetriebes 40 drehbar verbunden ist. Die den Luftmassenstrom leitende Leitplatte 66 und die Grundplatte 65 sind schräg zueinander angeordnet und laufen in einem Endbereich 63 zusammen, der in Richtung der zweiten Ventilstufe 70 ausgebildet ist.

Die zweite Ventilstufe 70 ist über eine Drehachse 71 sowie ein Befestigungsbereich 72 drehbar im Stufenventil 50 angeordnet. Auch die zweite Ventilstufe 70 ist plattenartig ausgebildet und besteht aus einem zur Wand der Ventilöffnung 51 hin ausgericheten Endbereich 74, einer Grundplatte 75, einer den Luftmassenstrom leitenden Leitplatte 76 sowie einer Befestigungsplatte 77. An der Befestigungsplatte 77 ist ein Befestigungsabschnitt 78 vorgesehen, über den die zweite Ventilstufe 70 drehbar mit dem Gelenkelement 42 des Antriebsgetriebes 40 verbunden ist. Die Leitplatte 76, die im geschlossenen Zustand des Stufenventils 50 mit dem Endbereich 63 der ersten Ventilstufe 60 in Berührung kommt, weist im Bereich, in dem der Endbereich 63 der ersten Ventilstufe 60 an der Leitplatte 76 der zweiten Ventilstufe 70 anliegt, ein zusätzliches Dichtungselement 79 auf. Wie in Figur 4 dargestellt ist, drückt der Endbereich 63 der ersten Ventilstufe 60 im geschlossenen Zustand gegen das Dichtelement 79 der zweiten Ventilstufe 70, wodurch ein Austritt des Luftmassenstroms im geschlossenen Zustand des Stufenventils 50 sicher und vollständig vermieden wird. Weiterhin weist die Leitplatte 76 ein wulstartig verbreitertes Ende 73 auf. Das Ende 73 hat die Aufgabe, den Luftmassenstrom im geöffneten Zustand des Stufenventils 50 auf die Leitplatte 76 abzulenken. Die wulstartige Ausgestaltung des Endes 73 ist jedoch nicht zwingend erforderlich, so daß auch andere Ausgestaltungen der Leitplatte denkbar ist. Voraussetzung ist nur, daß die Ventilstufen aerodynamisch günstig ausgebildet sind.

Die der Wand der Ventilöffnung 51 gegenüberliegenden Endbereiche 64 und 74 der ersten Ventilstufe 60 und der zweiten Ventilstufe 70 sind leicht abgerundet ausgebildet, um ein Drehen der ersten Ventilstufe 60 und der zweiten Ventilstufe 70 innerhalb der Ventilöffnung 51 zu erleichtern. Weiterhin können die durch die Drehachsen 61, 71 und die Befestigungsbereiche 62, 72 festgelegten Drehpunkte der ersten Ventilstufe 60 und der zweiten Ventilstufe 70 je nach Größe der Ventilstufen und der Anwendungserfordernisse derart gewählt werden, daß zum Öffnen und Schließen des Stufenventils 50 nur minimale Betätigungskräfte erforderlich sind.

Das Stufenventil 50 wird in Pfeilrichtung L angeströmt.

Die Funktionsweise des Stufenventils 50 wird nun unter Bezugnahme auf die Figuren 4 bis 6 näher beschrieben.

In Figur 4 ist das Stufenventil 50 in geschlossener Position dargestellt. Beide Ventilstufen 60 und 70 befinden sich in ihrer vollständig geschlossenen Stellung. Dabei sind die beiden Ventilstufen 60 und 70 in einer Ebene und somit in derselben Position ausgerichtet. Um zu vermeiden, daß der im Innenraum der Kabine des Flugzeugs vorhandene Luftmassenstrom aus dem Stufenventil 50 austreten kann, ist der geneigte Endbereich 63 der ersten Ventilstufe 60 fest gegen die ebenfalls geneigte Leitplatte 76 der zweiten Ventilstufe 70 angedrückt. Zusätzlich dazu ist in diesem Bereich das zusätzliche Dichtungselement 79 vorgesehen, was eine vollständige Abdichtung des Stufenventils gewährleistet.

Figur 5 zeigt das Stufenventil 50 mit geöffneter erster Ventilstufe 60. Diese Ventilstellung wird gewählt, wenn sich das Flugzeug in Reisehöhe befindet, wo ein großer Differenzdruck zwischen dem Kabineninnenraum und der äußeren Umgebung des Flugzeugs vorherrscht. Die erste Ventilstufe 60 ist soweit geöffnet, daß nicht nur eine Regelung des austretenden Luftmassenstroms gewährleistet ist, sondern daß gleichzeitig auch ein maximaler Schubgewinn durch den austretenden Luftmassenstrom erzielt wird. Die zweite Ventilstufe 60 ist weiterhin soweit geschlossen, daß kein Luftmassenstrom austreten kann. Der Luftmassenstrom wird durch das Ende 73 der zweiten Ventilstufe 70 abgelenkt und durch die schrägen Leitplatten 66 und 76 kanalisiert. Die Öffnung der ersten Ventilstufe 60 erfolgt durch die Drehung des Antriebsgetriebes 40 in Richtung des Pfeils D.

In Figur 6 ist das Stufenventil 50 in seiner vollständig geöffneten Position dargestellt. Diese geöffnete Position des Stufenventils 50 wird gewählt, wenn nur ein geringer Differenzdruck zwischen dem Kabineninnenraum und der äußeren Umgebung des Flugzeugs vorherrscht, wie dies beispielsweise bei geringen Flughöhen oder am Boden der Fall ist.

Sowohl die erste Ventilstufe 60 als auch die zweite Ventilstufe 70 sind in der vollständig geöffneten Stellung wiederum in der gleichen Position ausgerichtet. Im Unterschied zum Ausführungsbeispiel gemäß den Figuren 1 bis 3 sind sie im vorliegenden Ausführungsbeispiel jedoch nicht in gleicher Ebene sondern parallel zueinander ausgerichtet. Auch durch diese Ausrichtung der beiden Ventilstufen 60, 70 wird erreicht, daß dem Luftmassenstrom nur ein minimaler Widerstand entgegengesetzt wird. Gleichzeitig wird eine möglichst große Öffnung bereitgestellt, aus der der Luftmassenstrom aus dem Stufenventil 50 austreten kann.

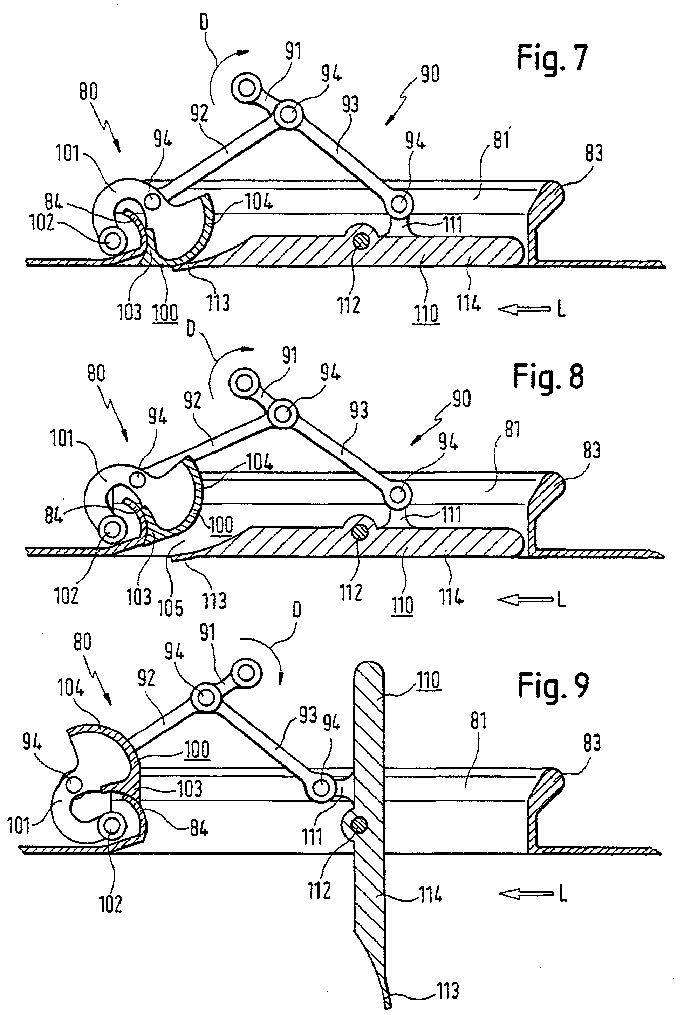

In den Figuren 7 bis 9 ist ein weiteres Ausführungsbeispiel des erfindungsgemäßen Stufenventils dargestellt.

Gemäß Figur 7 ist das Stufenventil 80 wiederum in einer Ventilöffnung 81 eines Flugzeugrumpfs angeordnet. Das Stufenventil 80 weist eine erste Ventilstufe 100, eine zweite Ventilstufe 110 sowie ein Antriebsgetriebe 90 auf. Die erste Ventilstufe 100 und die zweite Ventilstufe 110 sind hintereinander in der Ventilöffnung 81 angeordnet. Im Unterschied zu den Ausführungsformen gemäß den Figuren 1 bis 6 wird zuerst die zweite Ventilstufe 110 und danach die erste Ventilstufe 100 in Pfeilrichtung L angeströmt.

Das Stufenventil 80 ist etwa rechteckförmig ausgebildet und mit einem Rahmen 83 versehen. Dieser Rahmen 83 umgibt die Ventilöffnung 81 an drei Seiten. An der vierten Seite, an der die erste Ventilstufe 100 angeordnet ist, ist der Rahmen 83 mit einem gekrümmten Bereich 84 versehen.

Das Antriebsgetriebe 90 weist drei Gelenkelemente 91, 92, 93 auf, die über Drehgelenke 94 miteinander verbunden sind. Die Gelenkelemente 92 und 93, die zur Betätigung der Ventilstufen 100, 110 dienen, sind auf einer gemeinsamen Achse mit dem Gelenkelement 91 verbunden. Die Anlenkung an den Ventilstufen 100, 110 erfolgt ebenfalls über Drehgelenke 94.

Die erste Ventilstufe 100 weist einen Bügel 101 auf, der um eine Drehachse 102 schwenkbar ist. Der Bügel 101 ist starr mit zwei Abschnitten 103, 104 verbunden, die etwa einen Viertelzylinder ausbilden. Der Abschnitt 103 ist hierbei in der Krümmung an den Bereich 84 des Rahmens angepaßt und kann auf diesem gleiten. Der Abschnitt 104 weist etwa die Form eines Viertelkreises auf.

Die zweite Ventilstufe 110 weist einen Befestigungsabschnitt 111 auf, der das Drehgelenk 94 zum Anbringen des Gelenkelements 93 trägt und um eine Drehachse 112 schwenkbar ist. Zur Erleichterung der Schwenkbewegung ist die zweite Ventilstufe 110 an der dem Rahmen 83 zugewandten Seite abgerundet. Die zweite Ventilstufe 110 weist weiter an der der ersten Ventilstufe 100 zugewandten Seite einen etwa lippenartigen Abschnitt 113 auf. Sie verdickt sich ausgehend von diesem Abschnitt 113 zu einem weiteren, etwa plattenförmigen Abschnitt 114.

Die Funktionsweise des Stufenventils 80 wird nun unter Bezugnahme auf die Figuren 7 bis 9 näher beschrieben.

In Figur 7 ist das Stufenventil 80 in geschlossener Position dargestellt. Beide Ventilstufen 100, 110 befinden sich in ihrer vollständig geschlossenen Stellung. Dabei sind die beiden Ventilstufen 100, 110 im wesentlichen in einer Ebene und somit in derselben Position ausgerichtet. Um zu vermeiden, daß der im Innenraum der Kabine des Flugzeugs vorhandene Luftmassenstrom aus dem Stufenventil 80 austreten kann, ist der etwa viertelkreisförmige Abschnitt 104 der ersten Ventilstufe 100 fest gegen den lippenartigen Abschnitt 113 der zweiten Ventilstufe 110 gedrückt. Zusätzlich können nicht näher dargestellte Dichtungselemente vorgesehen sein.

Zum Öffnen des Stufenventils 80 wird das Gelenkelement 91 in Pfeilrichtung D verschwenkt. Hierdurch wird die erste Ventilstufe 100 etwas geöffnet, so daß sich die in Figur 8 gezeigte Darstellung ergibt. Diese Ventilstellung wird gewählt, wenn sich das Flugzeug in Reisehöhe befindet, wo ein großer Differenzdruck zwischen dem Kabineninnenraum und der äußeren Umgebung des Flugzeugs vorherrscht. Die erste Ventilstufe 100 ist soweit geöffnet, daß nicht nur eine Regelung des austretenden Luftmassenstroms gewährleistet ist, sondern daß gleichzeitig auch ein maximaler Schubgewinn durch den austretenden Luftmassenstrom erzielt wird. Der austretende Luftmassenstrom strömt hierbei durch eine Öffnung 105, die zwischen dem Abschnitt 104 der ersten Ventilstufe 100 sowie der zweiten Ventilstufe 110 gebildet ist. Die zweite Ventilstufe 110 ist weiterhin soweit geschlossen, daß kein Luftmassenstrom austreten kann. Eine Kanalisierung des austretenden Luftmassenstroms erfolgt durch den Abschnitt 113 der zweiten Ventilstufe 110, den Abschnitt 104 der ersten Ventilstufe 100 sowie durch den Rahmen 83.

In Figur 9 ist das Stufenventil 80 in seiner vollständig geöffneten Position dargestellt, die durch ein weiteres Verschwenken des Gelenkelements 91 in Pfeilrichtung D erreicht wird. Diese geöffnete Position des Stufenventils 80 wird gewählt, wenn nur ein geringer Differenzdruck zwischen dem Kabineninnenraum und der äußeren Umgebung des Flugzeugs vorherrscht, wie dies beispielsweise bei geringen Flughöhen oder am Boden der Fall ist.

Die erste Ventilstufe 100 ist in vollständig geöffnetem Zustand aus der Ventilöffnung 81 entfernt. Der Abschnitt 104 ist hierbei so ausgebildet, daß er in diesem vollständig geöffneten Zustand den Rahmen 83 vervollständigt. Der austretende Luftmassenstrom wird somit gut kanalisiert. Die zweite Ventilstufe 110 ist in vollständig geöffnetem Zustand im wesentlichen senkrecht zur Ventilöffnung 81 angeordnet. Sie setzt daher dem austretenden Luftmassenstrom einen sehr geringen Widerstand entgegen. Gleichzeitig wird die Ventilöffnung 81 maximiert.

In der in den Figuren 7 bis 9 dargestellten Ausführungsform des Stufenventils 80 erfolgt eine Anströmung in Pfeilrichtung L dergestalt, daß zuerst die zweite Ventilstufe 110 und nachfolgend die erste Ventilstufe 100 angeströmt wird. Diese Anordnung der Ventilstufen 100, 110 verringert das zur Betätigung des Stufenventils 80 erforderliche Drehmoment, wie an Hand von Figur 8 näher beschrieben wird.

In Figur 8 ist das Stufenventil 80 mit geöffneter erster Ventilstufe 100 dargestellt. Die Öffnung 105 ermöglicht das Austreten eines Luftmassenstroms. Dieser Luftmassenstrom mischt sich mit der in Pfeilrichtung L vorbeiströmenden Umgebungsluft. Hierdurch bilden sich Wirbel, die auf Grund der in den Wirbeln entstehenden Druckunterschiede Kräfte erzeugen. Diese Kräfte treten in Pfeilrichtung L stromabwärts des Stufenventils auf und wirken somit nicht auf die zweite Ventilstufe 110, sondern direkt auf den Rumpf des Fluggeräts. Die zweite Ventilstufe 110 wird somit im wesentlichen nur durch den Differenzdruck zwischen der Kabine und der Umgebungsluft belastet, nicht aber durch Verwirbelungen. Sie kann daher mit einem geringeren Drehmoment als bei der Ausführungsform gemäß den Figuren 4 bis 6 in ihre vollständig geöffnete Stellung gemäß Figur 9 verbracht werden.

Allen Ausführungsformen der Erfindung ist gemeinsam, daß das Stufenventil in einer einzigen Ventilöffnung des Flugzeugs angeordnet werden kann, und daß die kleinere erste Ventilstufe getrennt von der größeren zweiten Ventilstufe über ein einziges Antriebsgetriebe betätigt werden kann. Dadurch wird erreicht, daß mit dem austretenden Luftmassenstrom ein maximaler Schubgewinn erzielt und eine Energieeinsparung erreicht werden kann. Zur ausreichenden Abdichtung können zwischen den Stirnseiten der Ventilstufen und den jeweiligen Ventilöffnungen sowie zwischen den miteinander kommunizierenden Bereiche der Ventilstufen selbst Dichtelemente vorgesehen sein, die in den Figuren aus Vereinfachungsgründen jedoch nur zum Teil dargestellt sind.

## Patentansprüche

1. Stufenventil, insbesondere Kabinenabluftventil in einem Fluggerät, mit einer kleineren ersten Ventilstufe (20; 60; 100) und einer größeren zweiten Ventilstufe (30; 70; 110) und mit einem Antriebsgetriebe (40; 90), **dadurch gekennzeichnet, daß** die erste Ventilstufe (20; 60; 100) und die zweite Ventilstufe (30; 70; 110) derart mit dem Antriebsgetriebe (40; 90) verbunden sind, daß die erste Ventilstufe (20; 60; 100) stets getrennt von der zweiten Ventilstufe (30; 70; 110) betätigbar ist, solange die zweite Ventilstufe (30; 70; 110) geschlossen ist.

2. Stufenventil nach Anspruch 1, **dadurch gekennzeichnet, daß** die erste Ventilstufe (20; 60; 100) und/oder die zweite Ventilstufe (30; 70; 110) plattenförmig ausgebildet ist.

3. Stufenventil nach einem der Ansprüche 1 oder 2, **dadurch gekennzeichnet, daß** die erste Ventilstufe (20; 60; 100) und die zweite Ventilstufe (30; 70; 110) in einer Ventilöffnung (11; 51; 81) angeordnet sind.

4. Stufenventil nach einem der Ansprüche 1 bis 3, **dadurch gekennzeichnet, daß** die erste Ventilstufe (20) innerhalb der zweiten Ventilstufe (30) angeordnet ist.

5. Stufenventil nach Anspruch 4, **dadurch gekennzeichnet, daß** die erste Ventilstufe (20) rechteckig ausgebildet ist und/oder daß die zweite Ventilstufe (30) eine runde Grundgeometrie aufweist.

6. Stufenventil nach einem der Ansprüche 1 bis 3, **dadurch gekennzeichnet, daß** die erste Ventilstufe (30; 100) und die zweite Ventilstufe (70; 110) hintereinander angeordnet sind.

7. Stufenventil nach Anspruch 6, dadurch gekennzeichent, daß die erste Ventilstufe (30) und/oder die zweite Ventilstufe (70; 100) rechteckig ausgebildet ist.

8. Stufenventil nach einem der Ansprüche 1 bis 7, **dadurch gekennzeichnet, daß** das Antriebsgetriebe (40; 90) als Koppelgetriebe ausgebildet ist, das wenigstens zwei Gelenkelemente (41, 42, 43, 44; 91, 92, 93) aufweist, die drehbar miteinander verbunden sind.

9. Stufenventil nach Anspruch 8, **dadurch gekennzeichnet, daß** die wenigstens zwei Gelenkelemente (41, 42, 43, 44; 91, 92, 93) über Drehgelenke (45; 94) miteinander verbunden sind.

10. Stufenventil nach einem der Ansprüche 1 bis 9, **dadurch gekennzeichnet, daß** die erste Ventilstufe (20; 60) und die zweite Ventilstufe (30; 70) derart angeordnet sind, daß sie in der vollständig geöffneten Stellung und der vollständig geschlossenen Stellung in derselben Position ausgerichtet sind.

11. Stufenventil nach Anspruch 8 oder 9, **dadurch gekennzeichnet, daß** das Antriebsgetriebe (40) vier Gelenkelemente aufweist.

12. Stufenventil nach Anspruch 8 oder 9, **dadurch gekennzeichnet, daß** das Antriebsgetriebe (90) drei Gelenkelemente (91, 92, 93) aufweist.

13. Stufenventil nach Anspruch 12, **dadurch gekennzeichnet, daß** das Stufenventil (80) mit einem die Ventilöffnung (81) umgebenden Rahmen versehen ist.

14. Stufenventil nach Anspruch 13, **dadurch gekennzeichnet, daß** der Rahmen (83) einen gekrümmten Bereich (84) als Anlagefläche für die erste Ventilstufe (100) aufweist.

15. Stufenventil nach Anspruch 14, **dadurch gekennzeichnet, daß** bei geöffneter erster Ventilstufe (100) eine von der zweiten Ventilstufe (110) abgewandte Öffnung (105) entsteht.

16. Stufenventil nach einem der Ansprüche 12 bis 15, **dadurch gekennzeichnet, daß** die erste Ventilstufe (100) in vollständig geöffnetem Zustand aus der Ventilöffnung (81) entfernt ist.

17. Verfahren zur Regulierung des Kabinendrucks in einem Fluggerät, insbesondere einem Flugzeug, über ein Stufenventil (10; 50; 80) nach einem der Ansprüche 1 bis 16, **gekennzeichnet durch** folgende Schritte:
a) Betätigung der kleineren ersten Ventilstufe (20; 60; 100) als Regelstufe über das Antriebsgetriebe (40; 90) während des Flugs bei einem hohen Differenzdruck; und
b) zusätzliche Betätigung der größeren zweiten Ventilstufe (30; 70; 110) über das Antriebsgetriebe (40; 90) während des Flugs bei einem niedrigen Differenzdruck,
wobei die erste Ventilstufe (20; 60; 100) getrennt von der zweiten Ventilstufe (30; 70; 110) betätigt wird.

18. Verfahren nach Anspruch 17, **dadurch gekennzeichnet, daß** die erste Ventilstufe (20; 60) und die zweite Ventilstufe (30; 70) durch das Antriebsgetriebe (40) in der vollständig geöffneten Stellung und der vollständig geschlossenen Stellung in derselben Position ausgerichtet werden.

19. Verwendung eines Stufenventils (10; 50; 80) nach einem der Ansprüche 1 bis 16 als Kabinenabluftventil in einem Kabinendruckregelsystem von einem Fluggerät, insbesondere einem Flugzeug.

## Claims

1. A multistage valve, more particularly a cabin air exhaust valve in an aircraft, comprising a smaller first valve stage (20; 60; 100) and a larger second valve stage (30; 70; 110) and a drive mechanism (40; 90), **characterized in that** said first valve stage (20; 60; 100) and said second valve stage (30; 70; 110) are connected such to said drive mechanism (40; 90) that said first valve stage (20; 60; 100) is always actuated separately from said second valve stage (30; 70; 110) as long as said second valve stage (30; 70; 110) is closed.

2. The multistage valve as set forth in claim 1, **characterized in that** said first valve stage (20; 60; 100) and/or said second valve stage (30; 70; 110) are configured plate-shaped.

3. The multistage valve as set forth in claim 1 or 2, **characterized in that** said first valve stage (20; 60; 100) and said second valve stage (30; 70; 110) are arranged in a valve port (11; 51; 81).

4. The multistage valve as set forth in any of the claims 1 to 3, **characterized in that** said first valve stage (20) is arranged within said second valve stage (30).

5. The multistage valve as set forth in claim 4, **characterized in that** said first valve stage (20) is configured rectangular and/or said second valve stage (30) comprises a round base geometry.

6. The multistage valve as set forth in any of the claims 1 to 3, **characterized in that** said first valve stage (60; 100) and said second valve stage (70; 110) are arranged in sequence.

7. The multistage valve as set forth in claim 6, **characterized in that** said first valve stage (20; 60) and/or said second valve stage (70; 100) is configured rectangular.

8. The multistage valve as set forth in any of the claims 1 to 7, **characterized in that** said drive mechanism (40; 90) is configured as a linkage mechanism comprising at least two links (41, 42, 43, 44; 91, 92, 93) each rotatably connected to the other.

9. The multistage valve as set forth in claim 8, **characterized in that** said at least two links (41, 42, 43, 44; 91, 92, 93) are connected to each other via pivots (45; 94).

10. The multistage valve as set forth in any of the claims 1 to 9, **characterized in that** said first valve stage (20; 60) and said second valve stage (30; 70) are arranged such that they are oriented in the same position when fully open and fully closed.

11. The multistage valve as set forth in claim 8 or 9, **characterized in that** said drive mechanism (40) comprises four links (41, 42, 43, 44).

12. The multistage valve as set forth in claim 8 or 9, **characterized in that** said drive mechanism (90) comprises three links (91, 92, 93).

13. The multistage valve as set forth in claim 12, **characterized in that** said multistage valve (80) is provided with a frame surrounding said valve port (81).

14. The multistage valve as set forth in claim 13, **characterized in that** said frame (83) comprises a curved portion (84) as the contact surface area for said first valve stage (100).

15. The multistage valve as set forth in claim 14, **characterized in that** on opening of said first valve stage (100) an aperture (105) materializes facing away from said second valve stage (110).

16. The multistage valve as set forth in any of the claims 12 to 15, **characterized in that** said first valve stage (100) in said fully open condition is remote from said valve port (81).

17. A method for cabin pressurization in an aircraft, more particularly in an airplane, by means of a multistage valve (10; 50; 80) as set forth in any of the claims 1 to 16, comprising the following steps:
a) actuating said smaller first valve stage (20; 60; 100) acting as pressure regulator via said drive mechanism (40; 90) during flight at a high differential pressure; and
b) additionally actuating said larger second valve stage (30; 70; 110) via said drive mechanism (40; 90) during flight at a low differential pressure,
said first valve stage (20; 60; 100) being actuated separately from said second valve stage (30; 70; 110)

18. The method as set forth in claim 17, **characterized in that** said first valve stage (20; 60) and said second valve stage (30; 70) are oriented in the same position by said drive mechanism (40) when set fully open and fully closed.

19. Use of a multistage valve as set forth in any of the claims 1 to 16 as a cabin air exhaust valve in a cabin pressurization system of an aircraft, more particularly of an airplane.

## Revendications

1. Clapet à étages, en particulier clapet pour l'air évacué de la cabine dans un appareil volant, comportant un premier étage de clapet plus petit (20 ; 60 ; 100) et un second étage de clapet plus grand (30 ; 70 ; 110) et comportant une transmission d'entraînement (40 ; 90), **caractérisé en ce que** le premier étage de clapet (20; 60; 100) et le second étage de clapet (30 ; 70 ; 110) sont reliés à la transmission d'entraînement (40 ; 90) de telle sorte que le premier étage de clapet (20; 60 ; 100) est susceptible d'être actionné toujours séparément du second étage de clapet (30 ; 70 ; 110), tant que le second étage de clapet (30 ; 70 ; 110) est fermé.

2. Clapet à étages selon la revendication 1, **caractérisé en ce que** le premier étage de clapet (20 ; 60 ; 100) et/ou le second étage de clapet (30 ; 70; 110) est réalisé en forme de plaque.

3. Clapet à étages selon l'une ou l'autre des revendications 1 et 2, **caractérisé en ce que** le premier étage de clapet (20 ; 60 ; 100) et le second étage de clapet (30 ; 70 ; 110) sont agencés dans un orifice à clapet (11; 51; 81).

4. Clapet à étages selon l'une quelconque des revendications 1 à 3, **caractérisé en ce que** le premier étage de clapet (20) est agencé à l'intérieur du second étage de clapet (30).

5. Clapet à étages selon la revendication 4, **caractérisé en ce que** le premier étage de clapet (20) est réalisé rectangulaire et/ou **en ce que** le second étage de clapet (30) présente une géométrie de base circulaire.

6. Clapet à étages selon l'une quelconque des revendications 1 à 3, **caractérisé en ce que** le premier étage de clapet (30; 100) et le second étage de clapet (70; 110) sont agencés l'un derrière l'autre.

7. Clapet à étages selon la revendication 6, **caractérisé en ce que** le premier étage de clapet (30) et/ou le second étage de clapet (70 ; 100) est réalisé rectangulaire.

8. Clapet à étages selon l'une quelconque des revendications 1 à 7, **caractérisé en ce que** la transmission d'entraînement (40 ; 90) est réalisée sous forme de transmission d'accouplement qui comprend au moins deux éléments articulés (41, 42, 43, 44 ; 91, 92, 93) qui sont reliés en rotation l'un à l'autre.

9. Clapet à étages selon la revendication 8, **caractérisé en ce que** lesdits au moins deux éléments articulés (41, 42, 43, 44 ; 91, 92, 93) sont reliés l'un à l'autre via des articulations tournantes (45 ; 94).

10. Clapet à étages selon l'une quelconque des revendications 1 à 9, **caractérisé en ce que** le premier étage de clapet (20 ; 60) et le second étage de clapet (30 ; 70) sont agencés de telle sorte qu'ils sont orientés dans la même position dans la situation entièrement ouverte et dans la situation entièrement fermée.

11. Clapet à étages selon l'une ou l'autre des revendications 8 et 9, **caractérisé en ce que** la transmission d'entraînement (40) comprend quatre éléments articulés (40).

12. Clapet à étages selon l'une ou l'autre des revendications 8 et 9, **caractérisé en ce que** la transmission d'entraînement (90) comprend trois éléments articulés (91, 92, 93).

13. Clapet à étages selon la revendication 12, **caractérisé en ce que** le clapet à étages (80) est pourvu d'un cadre entourant l'orifice à clapet (81).

14. Clapet à étages selon la revendication 13, **caractérisé en ce que** le cadre (83) comprend une zone incurvée (84) en tant que surface d'appui pour le premier étage de clapet (100).

15. Clapet à étages selon la revendication 14, **caractérisé en ce que** lorsque le premier étage de clapet (100) est ouvert, il se produit un orifice (105) détourné du second étage de clapet (110).

16. Clapet à étages selon l'une quelconque des revendications 12 à 15, **caractérisé en ce que** dans l'état entièrement ouvert, le premier étage de clapet (100) est éloigné de l'orifice à clapet (81).

17. Procédé de régulation de la pression de cabine dans un appareil volant, en particulier dans un avion, via un clapet à étages (10 ; 50; 80) selon l'une quelconque des revendications 1 à 16, **caractérisé par** les étapes suivantes :
a) on actionne un premier étage de clapet plus petit (20 ; 60 ; 100) en tant qu'étage de régulation via la transmission d'entraînement (40 ; 90) pendant le vol avec une haute pression différentielle, et
b) on actionne en supplément le second étage de clapet plus grand (30; 70 ; 110) via la transmission d'entraînement (40 ; 90) pendant le vol avec une faible pression différentielle,
le premier étage de clapet (20 ; 60 ; 100) étant actionné séparément du second étage de clapet (30 ; 70 ; 110).

18. Procédé selon la revendication 17, **caractérisé en ce que** dans la situation entièrement ouverte et dans la situation entièrement fermée, le premier étage de clapet (20 ; 60) et le second étage de clapet (30 ; 70) sont orientés dans la même position par la transmission d'entraînement (40).

19. Application d'un clapet à étages (10 ; 50 ; 80) selon l'une quelconque des revendications 1 à 16 en tant que clapet pour l'air évacué de la cabine dans un système de régulation de la pression de cabine d'un appareil volant, en particulier d'un avion.
